# EUROPEAN PATENT SPECIFICATION

(11) **EP 3 747 215 B1**
(45) Date of publication and mention of the grant of the patent: **29.06.2022**
(21) Application number: 19804188.1
(22) Date of filing: 09.05.2019
(51) Int. Cl.: H04W 48/08, H04W 48/18, H04W 60/00

(54) **INFORMATION PROCESSING METHOD, NETWORK DEVICE, TERMINAL DEVICE**
INFORMATIONSVERARBEITUNGSVERFAHREN, NETZWERKVORRICHTUNG, ENDGERÄT
PROCÉDÉ DE TRAITEMENT D'INFORMATIONS, DISPOSITIF DE RÉSEAU ET DISPOSITIF TERMINAL

(30) Priority: 18.05.2018 US 201862673303 P
(43) Date of publication of application: 09.12.2020
(73) Proprietor: GUANGDONG OPPO MOBILE TELECOMMUNICATIONS CORP., LTD., Wusha, Chang'an Dongguan Guangdong 523860 (CN)
(72) Inventor: LIN, Huei-Ming, South Yarra, Victoria 3141 (AU)
(74) Representative: Manitz Finsterwald Patent- und Rechtsanwaltspartnerschaft mbB
(86) International application number: PCT/CN2019/086288
(87) International publication number: WO 2019/218932

(56) References cited:
- WO-A1-2017/061111
- WO-A1-2017/086647
- WO-A1-2017/086647
- CN-A- 101 370 293
- CN-A- 104 871 600
- CN-A- 107 896 380
- VIVO: "CN selection for LTE connected to 5GC", 3GPP DRAFT; R2-1804887_CN SELECTION FOR LTE CONNECTED TO 5GC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 14 April 2018 (2018-04-14), XP051428590, Retrieved from the Internet: URL:http://www.3gpp.org/ftp/Meetings%5F3GP P%5FSYNC/RAN2/Docs/ [retrieved on 2018-04-14]
- HUAWEI ET AL: "Discussion on initial CN selection", 3GPP DRAFT; R2-1713130 DISCUSSION ON INITIAL CN SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 17 November 2017 (2017-11-17), XP051371951, Retrieved from the Internet: URL:http://www.3gpp.org/ftp/tsg%5Fran/WG2% 5FRL2/TSGR2%5F100/Docs/ [retrieved on 2017-11-17]

## Description

### TECHNICAL FIELD

The present disclosure relates to the field of information processing technologies, and in particular, to an information processing method, a network device, and a terminal device.

### BACKGROUND

Rel-15 provides a mechanism for indicating, on E-UTRA (Evolved-UMTS Terrestrial Radio Access), whether a connection to a 5GC (5th-Generation Core) is available. Rel-15 also provides a mechanism for the UE (User Equipment) to indicate whether the UE has selected EPC (Evolved-UMTS Terrestrial Radio Access) or 5GC.

However, when a UE supporting EPS CIoT (Evolved Packet System Cellular Internet of Things) features and 5G CIoT (5th Generation Cellular Internet of Things) features and UE supporting only 5G CIoT features select via NB-IoT/WB-E-UTRA (Narrow Band Internet of Things/Wide Band Evolved Universal Terrestrial Radio Access) cells to connect to the core network, how to make the UEs (also called terminal devices) determine core networks to be selected is a problem that needs to be solved.

Related art can be found in WO2017086647A1, WO2017086647A1, WO2017061111A1, VIVO: "CN selection for L TE connected to 5GC" (3GPP DRAFT; R2-1804887, 14 April 2018), and HUAWEI ET AL: "Discussion on initial CN selection" (3GPP DRAFT; R2-1713130, 17 November 2017).

### SUMMARY

The present invention is defined in the claims.

To solve the above-described technical problems, embodiments of the present disclosure provide an information processing method, a network device, a terminal device, a chip, a computer readable storage medium, a computer program product, and a computer program.

According to a first aspect, there is provided an information processing method applied to a network device capable of connecting to at least one core network or connected to at least one type of core network, the method including transmitting first indication information for a core network to a terminal device, wherein the first indication information is used to assist the terminal device to select a target core network type and/or a target core network.

According to a second aspect, there is provided an information processing method applied to a terminal device, the method including receiving first indication information for a core network from a network device, wherein the first indication information is used to assist the terminal device to select a target core network type and/or a target core network and the network device is capable of connecting to at least one core network or to at least one type of core network type; and selecting a target core network type and/or a target core network based on the first indication information for the core network.

According to a third aspect, there is provided a network device capable of connecting to at least one core network, or capable of connecting to at least one type of core network. The network device includes a first communication unit configured to transmit first indication information for a core network to a terminal device, wherein the first indication information is used to assist the terminal device to select a target core network type and/or a target core network.

According to a fourth aspect, there is provided a terminal device. The terminal device includes a second communication unit configured to receive first indication information for a core network from a network device, wherein the first indication information is used to assist the terminal device to select a target core network type and/or a target core network and the network device is capable of connecting to at least one core network or to at least one type of core network type; and a second processing unit configured to select a target core network type and/or a target core network based on the first indication information for the core network.

According to a fifth aspect, there is provided a network device. The network device includes a processor and a memory. The memory is used to store a computer program, and the processor is used to invoke and run the computer program stored in the memory to execute the method in the first aspect or the implementations thereof.

According to a sixth aspect, there is provided a terminal device. The terminal device includes a processor and a memory. The memory is used to store a computer program, and the processor is used to invoke and run the computer program stored in the memory to execute the method in the second aspect or the implementations thereof.

According to a seventh aspect, there is provided a chip for implementing the method of any one of the first to fifth aspects or the implementations thereof.

In particular, the chip includes a processor for invoking a computer program from a memory and running the computer program such that a device installed with the chip performs the method as in any of the aspects of the first to second aspects described above or the implementations thereof.

According to an eighth aspect, there is provided a computer readable storage medium for storing a computer program that causes the computer to execute the method in any one of the first to second aspects or the implementations thereof.

According to a ninth aspect, there is provided a computer program product including computer program instructions that cause a computer to execute the method in any of the first to second aspects or implementations thereof.

According to a tenth aspect, there is provided a computer program which, when run on a computer, causes the computer to execute the method in any of the first to second aspects or the implementations thereof.

By using the foregoing solutions, it is possible to assist the terminal device in selecting a target core network type and/or a target core network by transmitting first instruction information to the terminal device when the network device can access multiple types of core networks or multiple core networks. In this way, it is possible to determine the target core network type and/or target core network to be accessed by the terminal device when the network device can access multiple types or multiple core networks, thereby improving the access efficiency of the terminal device and improving the processing efficiency of the system.

### BRIEF DESCRIPTION OF DRAWINGS

These features and advantages of the present disclosure will become apparent by reading the following description provided by way of example only and referring to the accompanying drawings, in which:
FIG. 1 is a first schematic view of a communication system architecture according to an embodiment of the present disclosure;
FIG. 2 is a first schematic flowchart of an information processing method according to an embodiment of the present disclosure;
FIG. 3 is a second schematic flowchart of an information processing method according to an embodiment of the present disclosure;
FIG. 4 is a third schematic flowchart of an information processing method according to an embodiment of the present disclosure;
FIG. 5 is a schematic structural diagram of a network device according to an embodiment of the present disclosure;
FIG. 6 is a schematic structural diagram of a terminal device according to an embodiment of the present disclosure;
FIG. 7 is a schematic structural diagram of a communication device according to an embodiment of the present disclosure;
FIG. 8 is a schematic block diagram of a chip according to an embodiment of the present disclosure; and
FIG. 9 is a second schematic view of a communication system architecture according to an embodiment of the present disclosure.

### DETAILED DESCRIPTION

In order to be able to understand in more detail the features and technical contents of the embodiments of the present disclosure, the implementations of the embodiments of the present disclosure will be described in detail below in conjunction with the accompanying drawings, which are for the purposes of illustration only and are not intended to limit the embodiments of the present disclosure.

The following describes the technical aspects of the embodiments of the present disclosure in conjunction with the accompanying drawings in the embodiments of the present disclosure. It will be apparent that the described embodiments are part rather than all of the embodiments of the present disclosure. Based on the embodiments of the present disclosure, all other embodiments obtained by those of ordinary skill in the art without creative efforts fall within the scope of the protection of the present disclosure.

The technical solutions of the embodiments of the present disclosure may be applied to various communication systems, such as a Global System of Mobile Communications (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Universal Mobile Telecommunication System (UMTS) system, Worldwide Interoperability for Microwave (WiMAX) system or 5G system.

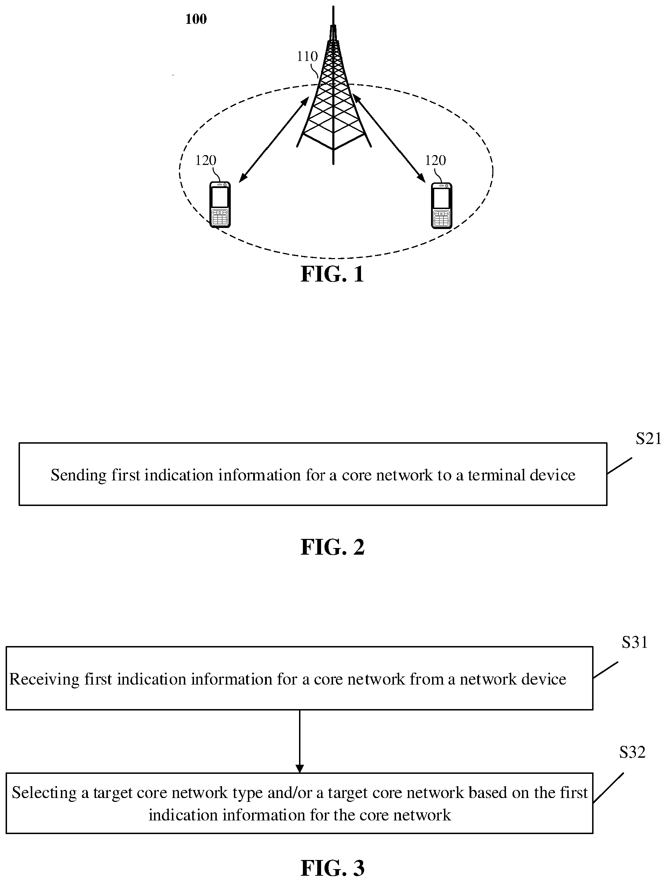

Exemplarily, the communication system 100 to which the embodiments of the present disclosure are applied may be as illustrated in FIG. 1. The communication system 100 may include a network device 110, which may be a device communicating with the UE 120 (or referred to as a communication terminal, or a terminal). The network device 110 may provide communication coverage for a particular geographic area and may communicate with UEs located within the coverage area. Alternatively, the network device 110 may be a base transceiver station (BTS) in a GSM system or a CDMA system, or may be a NodeB (NB) in a WCDMA system, or may be an Evolutional Node B (eNB or eNodeB) in an LTE system, or a radio controller in a Cloud Radio Access Network (CRAN), or may be a network device in a mobile switching center, a relay station, an access point, a vehicle-mounted device, a wearable device, a hub, a switch, a bridge, a router, a network side device in a 5G network, or a future evolved public land mobile network (PLMN).

The communication system 100 further includes at least one UE 120 located within the coverage of the network device 110. "UE" as used herein includes but is not limited to perform connection via a wired line, such as via a public switched telephone network (PSTN), digital subscriber line (DSL), digital cable, direct cable connection; And/or another data connection/network; And/or via a wireless interface, such as, for a cellular network, a wireless local area network (WLAN), a digital television network such as a DVB-H network, a satellite network, an AM-FM broadcast transmitter; and/or another UE provided to receive/transmit a communication signal; and/or Internet of Things (IoT) devices. A UE configured to communicate via a wireless interface may be referred to as a "wireless communication terminal", "wireless terminal" or "mobile terminal".

Alternatively, device to device (D2D) communication may be performed between UEs 120.

And "system" and "network" are often used interchangeably herein, "and/or", which is merely a description of the association relationship of an associated object, represents that there may be three relationships. For example, A and/or B may denote that there is A alone, there is A and B simultaneously, and there is B alone. In addition, the character "/" herein generally indicates that the front and rear associated objects are in "or" relationship.

In order to be able to understand in more detail the features and technical contents of the embodiments of the present disclosure, the implementations of the embodiments of the present disclosure will be described in detail below in conjunction with the accompanying drawings, which are for the purposes of illustration only and are not intended to limit the embodiments of the present disclosure.

Embodiments of the present disclosure provide an information processing method applied to a network device capable of being connected to at least one core network or connected to at least one type of core network. As illustrated in FIG. 2, the method includes the following operations.

In S21, first instruction information for a core network is transmitted to the terminal device.

The first indication information is used to assist the terminal device to select a target core network type and/or a target core network.

Accordingly, this embodiment also provides an information processing method applied to a terminal device. As illustrated in FIG. 3, the method includes the following operations.

At S31, first indication information for a core network is received from the network device. Here, the first indication information is used to assist the terminal device to select a target core network type and/or a target core network. The network device can connect to at least one core network or to at least one type of core network.

In S32, the target core network type and/or the target core network is selected based on the first indication information for the core network.

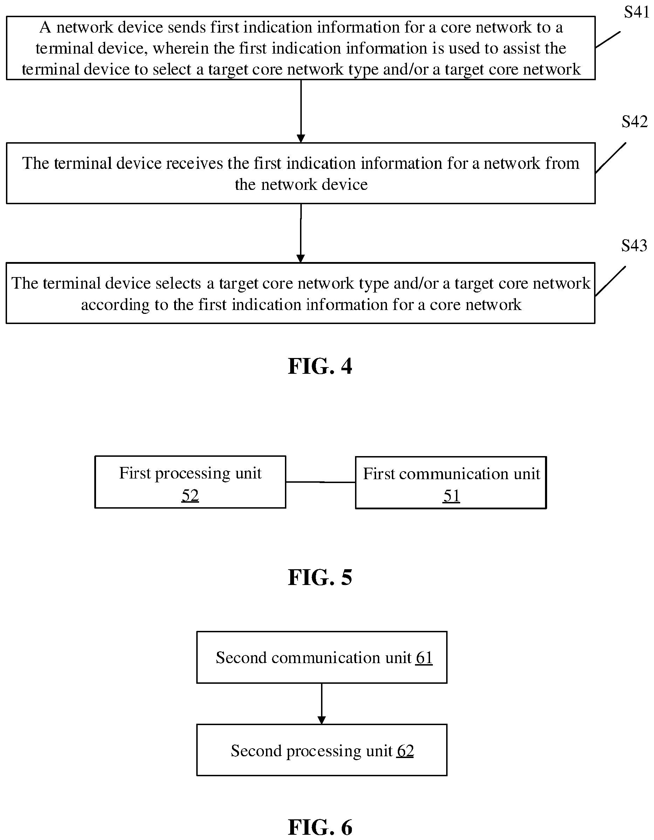

Referring to FIG. 4, the whole processing flow of the information processing method provided in this embodiment includes the following operations.

In S41, the network device transmits first indication information for a core network to the terminal device. Here, the first indication information is used to assist the terminal device to select a target core network type and/or a target core network.

In S42, the terminal device receives the first indication information for the core network from the network device.

In S43, the terminal device selects the target core network type and/or the target core network based on the first indication information for the core network.

In this embodiment, the network device may be a RAN (Radio Access Network) node. The terminal device may be a user equipment capable of communication.

Here, the network device may be connected to one or more core networks. Here, different core networks in the plurality of core networks are core networks of the same type, or different core networks in the plurality of core networks are core networks of different types. That is, when a network device is connected to a plurality of core networks, different core networks in the plurality of core networks may be partially of the same type of core network and the remaining portion is another type of core network.

Alternatively, the network device may be connected to one or more types of core networks. Specifically, when a network device is connected to a type of core network, the network device may connect to the same type of one or more core networks. When a network device is connected to multiple types of core networks, the same network device may connect to one or more core networks in each type of core network. For example, there are currently core network types 1, 2, 3. When the network device is connected to the core network type 1, the network device may be connected to two core networks A and B of the core network type 1. The network device may also be connected to the core network types 1 and 2, so that the network device may be connected to the core network A in the core network type 1, and certainly may also be connected to all the core networks A and B in the core network type 1, and the network device is connected to the core networks C and D in the core network type 2.

The first indication information includes at least one of: at least one core network type; at least one core network identification information; a parameter corresponding to each core network type; or a parameter corresponding to each core network.

Specifically, the core network type may be indicated by a type identifier. The core network type includes at least one of: a fifth generation (5G) core network, an evolved packet core network (EPC), or the third generation (3G) core network.

For example, the core network type may be represented by 3 bits, 001 may represent one type of core network, and 010 may represent another type of core network. The core network type may be acquired during the interaction between the network device and the core network. Certainly, there may also be other manners such as pre-storage, default, or protocol specification. Specific manners of obtaining the core network type are not described in detail.

The identification information of the core network may be acquired by the network device in advance by interacting with the core network. Certainly, there may also be other manners such as pre-storage, default, or protocol specification. Specific manners of obtaining the identification information are not described in detail.

In addition, the first indication information further includes parameters corresponding to each core network type. It is to be noted that the parameters corresponding to each core network type are parameters associated with features corresponding to each core network type, that is, features supported by different core network types may be indicated in the first indication information by parameters associated with the features, so that the terminal device selects, more explicitly, the core network types that the terminal device can access from different types of core networks according to the terminal device's capabilities or other parameters supported by the terminal device. The feature may include a CIoT (Cellular Internet of Thing) feature, which may include at least one of: a data transmission mechanism, or a power saving mechanism. For example, a data transmission mechanism of a certain type of core network is A1, and a power saving mechanism is B 1. Accordingly, the terminal device may determine whether the terminal device can access the terminal device according to whether the terminal device supports a corresponding feature, which will not be described in detail herein.

The first indication information may further include parameters corresponding to each core network. Also, the parameters corresponding to each core network may be parameters associated with features corresponding to a core network. The features may include CIoT (Cellular Internet of Thing) features, which may include at least one of a data transmission mechanism or a power saving mechanism. For example, a data transmission mechanism of a core network is A2, and a power saving mechanism is B2. Accordingly, the terminal device may determine whether the core network can be accessed according to whether the terminal device supports a corresponding feature, which is not described in detail herein.

It is to be noted that the first indication information may include the foregoing four types of information contents at the same time, or may include a part thereof, which is not limited in this embodiment.

The network device transmitting first indication information for the core network to the terminal device includes transmitting first indication information for the core network via broadcast signaling or dedicated signaling. Accordingly, the terminal device receiving the first indication information for the core network from the network device includes receiving, via broadcast signaling or dedicated signaling, the first indication information for the core network from the network device. For example, the first indication information may be sent via radio resource control (RRC, Radio Resource Control) signaling, or the first indication information may be sent via downlink control information (DCI, Downlink Control Information), and there may also be another transmitting manner, which is not exhaustive in this embodiment.

After receiving the first indication information, the terminal device selects the target core network type and/or the target core network based on the first indication information for the core network, and specifically the selecting includes one of:
when registering with a core network, selecting a target core network type and/or selecting a target core network based on the first indication information for the core network;
when sending a service request to a core network of at least one core network type, selecting a target core network type and/or selecting a target core network based on the first indication information for the core network;
when transmitting a service request to at least one core network, selecting a target core network type and/or selecting a target core network based on the first indication information for the core network.

The foregoing shows the timing at which the terminal device performs selection of core network type and/or core network. It is to be noted that the foregoing transmitting a service request(s) to a core network(s) of at least one core network type refers to transmitting a service request(s) to one or more core networks corresponding to each core network type of the at least one core network type. When the service request is sent to the at least one core network, the core network type is not taken into account, that is, the core network type to which the service request is to be sent is not concerned.

The processing that the terminal device selects a target core network type and/or a target core network may include at least one of:
selecting one or more target core network types and/or one or more target core networks according to features or preset features supported by the terminal device;
selecting one or more target core network types and/or one or more target core networks according to the second indication information of the network device; or
selecting one or more target core network types and/or one or more target core networks according to predefined rules.

Each of the methods will be described below.

### First Manner

In a first manner, the target core network type and/or target core network is selected according to the features supported by the terminal device, or the preset features.

In this manner, the following multiple scenarios may be included.

### Scenario 1:

The terminal device selects a target core network type from one or more core network types included in the first indication information and/or selects a target core network from one or more core networks included in the first indication information according to a feature supported by the terminal device or a preset feature. It is to be noted that, at this time, the terminal device may be able to know in advance (e.g., may be configured by a protocol or a network device by other information) the features corresponding to different core network types and/or the features corresponding to different core networks, and then the terminal device may determine, in a matching manner, the selection of the target core network type and/or the target core network.

Alternatively, the matched one or more target core network types and/or target core networks are selected according to the features corresponding to the core network type and/or the features corresponding to the core network indicated in the first indication information, and the features or preset features supported by the terminal device itself.

It is to be further understood that when the first indication information includes a feature corresponding to the core network type, the first indication information may be used as a reference. That is, the feature corresponding to the core network type stored in the terminal device may not be used as a reference. Similarly, when the first indication information includes the features of the core network, the first indication information is used.

In this case, the number of currently selected target core network types and the number of target core networks need not be considered.

Scenario 2:
a candidate core network type(s) and/or a candidate core network(s) is/are selected by the terminal device from one or more core network types and/or one or more core networks included in the first indication information according to a feature supported by the terminal device or a preset feature. The target core network type and/or the target core network is randomly selected from the candidate core network type and/or the candidate core network.

Alternatively or additionally, a matched candidate core network type(s) and/or candidate core network(s) is/are selected according to a feature corresponding to a core network type and/or a feature corresponding to a core network indicated in the first indication information, and a feature supported by the terminal device itself or a preset feature. From the candidate core network type and/or the candidate core network, the target core network type and/or the target core network is randomly selected.

In this case, the arbitrarily selected target core network type or target core network may be based on the number of constraints, for example, the terminal device is allowed to arbitrarily select no more than a first number of target core networks and/or no more than a second number of target core network types. The first number and the second number are set according to the actual situation, and are not described herein in detail.

The preset feature may be a feature that the terminal device itself configured in advance according to an actual situation.

The feature may include a CIoT (Cellular Internet of Thing) feature, which may include at least one of a data transmission mechanism, a power saving mechanism. Of course, the CIoT may still have other contents or parameters, but this embodiment is not exhaustive.

### Second manner

The terminal device may select a target core network type and/or a target core network according to the second indication information of the network device.

The second indication information of the network device may be carried and transmitted by RRC signaling or DCI, and certainly may also be carried and transmitted by other information, which is not exhaustive herein.

In the second indication information sent by the network device, the indicated content may include at least one of: a core network type that can be selected by the terminal device, a feature corresponding to the core network type that can be selected by the terminal device, identification information of the core network that can be selected by the terminal device, or feature information corresponding to the core network that can be selected by the terminal device.

In general, the second indication information is different from the first indication information, and the second indication information is used to indicate a core network type and/or a core network that can be selected by the terminal device. However, a specific embodiment of the second indication information may be an identifier of the core network type, a characteristic of the core network type, identification information of the core network, or a characteristic of the core network. The first indication information may be understood as a core network type and/or a core network to which the network device can connect. In other words, the content contained in the second indication information may be part of the first indication information.

The terminal device determines the core network type and/or the core network that can be selected by the terminal device according to the content indicated in the second indication information, and selects the target core network type and/or the target core network from the content indicated in the first indication information.

Alternatively, the feature of the core network type and/or the feature of the core network that can be selected is determined based on the content indicated in the second instruction information, and the target core network type and/or the target core network is selected based on the content indicated in the first instruction information.

In this embodiment, the number of the final selected target core network types may be limited or not limited. Similarly, the number of the final selected target core network may be limited or not limited. When defining, the number of selected target core networks and the number of selected target core network types may be defined by a first number and a second number, respectively, which is not described herein again.

### Third manner

The selection may be made according to a predefined rule, wherein the predefined rule may be predefined at the terminal device, may be sent to the terminal device by the network device, or may be specified in a protocol.

Specifically, the predefined rules may include priorities of different types of core networks, and/or priorities of different core networks.

The core network type includes at least one of: a fifth generation (5G) core network, an evolved packet core network (EPC), or a third generation (3G) core network.

When the predefined rule is set, the priority of the core network of the 5GC may be set to be the highest, the priority of the EPC is next, and the priority of the 3G core network is the lowest. A 5GC core network is selected by the terminal device according to a plurality of core network types indicated in the first indication information. When the first indication information does not contain the core network type of the highest level, the first indication information selects the core network type next to the priority level, and so on, and details will not be described herein.

In the foregoing predefined rules, only the 5GC core network is represented as the highest priority. It is to be noted that, when a predefined rule is actually set, different priorities of more types of core networks and different priorities may be set. However, this embodiment is not exhaustive.

Based on the foregoing solution, the terminal device further transmits selection information to the network device at the following time, and specifically, the method further includes: transmitting core network selection information to the network device when initiating a service request. Here, the core network selection information includes a type of the core network selected by the terminal device and/or identification information of the core network selected by the terminal device.

Here, the service request may be understood as a request to establish a connection with the network side. Based on this request, user surface resources can be established. In addition, the types of business can be a calling service, called service, emergency call service, high priority service and designated service. The specified service can be the service specified by the network device, for example, the service identification specified by the network device for the terminal device. Of course, the foregoing is just an example, and in fact may correspond to more business types, which will not be described in detail herein.

Accordingly, the processing performed by the network device includes receiving core network selection information from the terminal device. Here, the core network selection information includes a target core network type selected by the terminal device and/or identification information of the target core network selected by the terminal device.

After the receiving core network selection information sent by a terminal device, the method further includes: transmitting a service request to a core network corresponding to a target core network type selected by the terminal device; or determining a target core network selected by the terminal device according to identification information of the target core network selected by the terminal device, and transmitting a service request to the target core network selected by the terminal device.

That is, the network device determines a target core network type selected by the terminal device according to selection information sent by the terminal device, and then the network device sends a service request to at least one core network corresponding to the target core network type selected by the terminal device. That is, the service request sent by the terminal device is forwarded to at least one core network corresponding to the target core network type. In this case, the network device may forward the service request to all the core networks corresponding to the core network types selected by the terminal device, or may be part of the core networks.

Alternatively, the network device determines a target core network selected by the terminal device according to selection information sent by the terminal device, and then the network device sends a service request to the target core network selected by the terminal device.

It can be seen that, by using the foregoing solution, it is possible to assist the terminal device to select a target core network type and/or a target core network by transmitting first instruction information to the terminal device in a case where the network device can access multiple types of core networks or multiple core networks. In this way, it is possible to determine the target core network type and/or target core network to be accessed by the terminal device when the network device can access multiple types or multiple core networks, thereby improving the access efficiency of the terminal device and improving the processing efficiency of the system.

Embodiments of the present disclosure provide a network device capable of connecting to at least one core network or capable of connecting to at least one type of core network. As illustrated in FIG. 5, the network device includes a first communication unit 51.

The first communication unit 51 is configured to transmit the first indication information for the core network to the terminal device.

Here, the first indication information is used to assist the terminal device to select a target core network type and/or a target core network.

Accordingly, this embodiment also provides a terminal device. As illustrated in FIG. 6, the terminal device includes a second communication unit 61 and a second communication unit 62.

The second communication unit 61 is configured to receive the first indication information for the core network from the network device. Here, the first indication information is used to assist the terminal device to select a target core network type and/or a target core network. The network device can connect to at least one core network or to at least one type of core network.

The second processing unit 62 is configured to select the target core network type and/or the target core network based on the first indication information for the core network.

In this embodiment, the network device may be a RAN node. The terminal device may be a user equipment capable of communication.

The first indication information includes at least one of at least one of a core network type; at least one core network identification information; a parameter corresponding to each core network type; or parameters corresponding to each core network.

Specifically, the core network type may be indicated by a type identifier, the type of which includes at least one of a fifth generation (5G) core network, an evolved packet core network (EPC), or a third generation (3G) core network.

It is to be noted that the first indication information may include the foregoing four types of information contents at the same time, or may include a part thereof, which is not limited in this embodiment.

The first communication unit 51 of the network device transmits first indication information for the core network via broadcast signaling or dedicated signaling. Accordingly, the second communication unit 61 of the terminal device receives, via broadcast signaling or dedicated signaling, the first indication information for the core network from the network device. For example, the first indication information may be sent by using radio resource control (RRC, Radio Resource Control) signaling, or the first indication information may be sent by using downlink control information (DCI, Downlink Control Information), and there may also be another transmitting manner, which is not exhaustive in this embodiment.

After receiving the first indication information, the terminal device selects the target core network type and/or the target core network based on the first indication information for the core network. Specifically, the second processing unit 62 is configured to perform at least one of the following operations:
when registering with a core network, selecting a target core network type and/or selecting a target core network based on the first indication information for the core network;
when sending a service request to a core network of at least one core network type, selecting a target core network type and/or selecting a target core network based on the first indication information for the core network;
when transmitting a service request to at least one core network, selecting a target core network type and/or selecting a target core network based on the first indication information for the core network.

The second processing unit 62 may be configured to perform at least one of the following operations:
selecting one or more target core network types and/or one or more target core networks according to features or preset features supported by the terminal device;
selecting one or more target core network types and/or one or more target core networks according to the second indication information of the network device;
selecting one or more target core network types and/or one or more target core networks according to predefined rules.

Each of the specific processings is the same as described in the foregoing method operations, and will not be described herein again.

Based on the foregoing solution, the terminal device further transmits selection information to the network device at the following time. Specifically, the second communication unit 61 is configured to send core network selection information to the network device when a service request is initiated. Here, the core network selection information includes a type of the core network selected by the terminal device and/or identification information of the core network selected by the terminal device.

Accordingly, the processing performed by the network device includes receiving, by the first communication unit 51, the core network selection information sent by the terminal device. Here, the core network selection information includes a target core network type selected by the terminal device and/or identification information of the target core network selected by the terminal device.

After the receiving the core network selection information sent by the terminal device, the method further includes: transmitting, by the first communication unit 51, a service request to the core network corresponding to the target core network type selected by the terminal device.

Alternatively, as illustrated in FIG. 5, the network device further includes a first processing unit 52 that determines a target core network selected by the terminal device according to identification information of the target core network selected by the terminal device. Accordingly, the first communication unit 51 transmits a service request to the target core network selected by the terminal device.

It is to be understood that the functions of each unit of the network device and the terminal device are the same as those described in the foregoing method, but are not described herein in detail.

It can be seen that, by using the foregoing solution, it is possible to assist the terminal device to select a target core network type and/or a target core network by transmitting first instruction information to the terminal device in a case where the network device can access multiple types of core networks or multiple core networks. In this way, it is possible to determine the target core network type and/or target core network to be accessed by the terminal device when the network device can access multiple types or multiple core networks, thereby improving the access efficiency of the terminal device and improving the processing efficiency of the system.

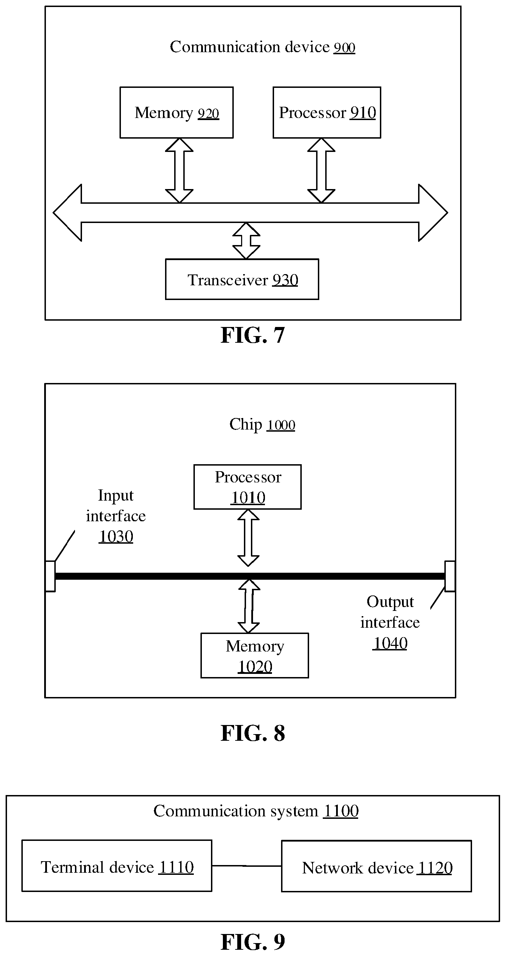

FIG. 7 is a schematic structural diagram of a communication device 900 according to an embodiment of the present disclosure. The communication device may be the UE or network device described above in the embodiment. The communication device 900 illustrated in FIG. 7 includes a processor 910 that 610 may invoke and run a computer program from memory to implement the method in embodiments of the present disclosure.

Alternatively, as illustrated in FIG. 7, the communication device 900 may further include a memory 920. Here, the processor 910 may invoke and run a computer program from the memory 920 to implement the method in the embodiments of the present disclosure.

The memory 920 may be a separate device independent of the processor 910, or may be integrated into the processor 910.

Optionally, as illustrated in FIG. 7, the communication device 900 may further include a transceiver 930 which may be controlled by the processor 910 to communicate with other devices, specifically, may send information or data to other devices, or receive information or data sent by other devices.

Alternatively, the communication device 900 may be specifically a terminal device or a network device of the embodiments of the present disclosure, and the communication device 900 may implement corresponding processes implemented by the mobile terminal/UE in the methods of the embodiments of the present disclosure, which are not described herein for brevity.

FIG. 8 is a schematic structural diagram of a chip according to an embodiment of the present disclosure. The chip 1000 illustrated in FIG. 8 includes a processor 1010 that may invoke and run a computer program from memory to implement the method in the embodiments of the present disclosure.

Alternatively, as illustrated in FIG. 8, the chip 1000 may further include a memory 1020. The processor 1010 may invoke and run a computer program from the memory 1020 to implement the method in the embodiments of the present disclosure.

The memory 1020 may be a separate device independent of the processor 1010, or may be integrated into the processor 1010.

Alternatively, the chip 1000 may further include an input interface 1030 and an output interface 1040.

Alternatively, the chip may be applied to the network device or the UE in the embodiments of the present disclosure, and the chip may implement corresponding processes implemented by the network device in the methods of the embodiments of the present disclosure, which are not described herein for brevity.

FIG. 9 is a schematic block diagram of a communication system 1100 according to an embodiment of the present disclosure. As illustrated in FIG. 9, the communication system 1100 includes a terminal device 1110 and a network device 1120.

The terminal device 1110 may be configured to implement a corresponding function implemented by the UE in the foregoing method, and the network device 1120 may be configured to implement a corresponding function implemented by the network device in the foregoing method for brevity, and details are not described herein again.

It is to be understood that the processor of the embodiments of the present disclosure may be an integrated circuit chip having a signal processing capability. In implementation, the steps of the above-described method embodiments may be accomplished by an integrated logic circuit of hardware in the processor or instructions in the form of software. The foregoing processors may be general purpose processors, digital signal processors (DSPs), application specific integrated circuits (ASICs), field programmable gate arrays (FPGAs) or other programmable logic devices, discrete gates or transistor logic devices, and discrete hardware components. The methods, steps, and logic block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be embodied directly in the execution of the hardware decoding processor or by the combination of hardware and software modules in the decoding processor. The software module may be located in a random-access memory, a flash memory, a read-only memory, a programmable read-only memory, or an electrically erasable programmable memory, a register, or other well-established storage medium in the art. The storage medium is located in the memory, and the processor reads the information in the memory and completes the steps of the above-described method in combination with its hardware.

It will be appreciated that the memory in the embodiments of the present disclosure may be a volatile memory or a non-volatile memory, or may include both volatile and non-volatile memory. Here, the non-volatile memory may be a read-only memory (ROM), a programmable read-only memory (PROM), an erasable programmable read-only memory (EPROM), an electrically erasable programmable read-only memory (ElectrEPROM), or a flash memory. The volatile memory may be a random access memory (RAM) that serves as an external cache. By way of example but not of limitation, many forms of RAM are available, such as static random access memory (SRAM), dynamic random access memory (DRAM), synchronous dynamic random access memory (SDRAM), double data rate synchronous dynamic random access memory (DDR SDRAM), enhanced dynamic random access memory (ESDRAM), synchronous link dynamic random access memory (SRAM), and direct direct memory bus random access memory (DR RAM). It is to be noted that the memory of the systems and methods described herein is intended to include but not be limited to these and any other suitable types of memory.

It is to be understood that the memory described above is exemplary but not limiting, for example, the memory in the embodiments of the present disclosure may also be a static random access memory (SRAM), a dynamic random access memory (DRAM), a synchronous dynamic random access memory (SDRAM), a double data rate SDRAM (DDR SDRAM), an enhanced synchronous dynamic SDRAM (enhanced ESDRAM), a synch DRAM (synlink DRAM, SLDRAM), and a direct RAM (Direct Rambus RAM, DR). That is, the memory in the embodiments of the present disclosure is intended to include but is not limited to these and any other suitable type of memory.

Embodiments of the present disclosure also provide a computer readable storage medium for storing computer programs.

Optionally, the computer readable storage medium may be applied to the network device in the embodiments of the present disclosure, and the computer program causes the computer to execute corresponding processes implemented by the network device in the methods of the embodiments of the present disclosure, which are not described herein for brevity.

Alternatively, the computer readable storage medium may be applied to the UE in the embodiments of the present disclosure, and the computer program causes the computer to execute corresponding processes implemented by the mobile terminal/UE in the methods of the embodiments of the present disclosure, which are not described herein for brevity.

Embodiments of the present disclosure also provide a computer program product including computer program instructions.

Optionally, the computer program product may be applied to the network device in the embodiments of the present disclosure, and the computer program instruction causes the computer to execute corresponding processes implemented by the network device in the methods of the embodiments of the present disclosure, which are not described herein for brevity.

Alternatively, the computer program product may be applied to the mobile terminal/UE in the embodiments of the present disclosure, and the computer program instruction causes the computer to execute corresponding processes implemented by the mobile terminal/UE in the methods of the embodiments of the present disclosure, which are not described herein for brevity.

Embodiments of the present disclosure also provide a computer program.

Optionally, the computer program may be applied to the network device in the embodiment of the present disclosure, and when the computer program runs on a computer, the computer executes corresponding processes implemented by the network device in the methods of the embodiment of the present disclosure, which are not described herein for brevity.

Alternatively, the computer program may be applied to the mobile terminal/UE in the embodiments of the present disclosure, and when the computer program runs on a computer, the computer executes corresponding processes implemented by the mobile terminal/UE in the methods of the embodiments of the present disclosure, which are not described herein for brevity.

One of ordinary skill in the art will recognize that the units and algorithm steps of each example described in connection with the embodiments disclosed herein can be implemented in electronic hardware, or a combination of computer software and electronic hardware. Whether these functions are performed in hardware or software depends on the particular application and design constraints of the technical solution. A person skilled in the art may use different methods for each particular application to implement the described functions, but such implementation should not be considered to be outside the scope of this disclosure.

It will be apparent to those skilled in the art that, for convenience and brevity of description, the detailed working processes of the systems, apparatus and units described above may be referred to in the corresponding processes in the foregoing method embodiments, which are not described herein again.

In several embodiments provided by the present disclosure, it is to be understood that the disclosed systems, apparatus and methods may be implemented in other ways. For example, the device embodiments described above are merely illustrative, for example, the division of the units is merely a logical function division, and there may be other means of division in actual implementation, for example, multiple units or components may be combined or integrated into another system, or some features may be ignored or not performed. On the other hand, the illustrated or discussed coupling or direct coupling or communication connections between each other may be via some interfaces, indirect coupling or communication connections of devices or units, may be in electrical, mechanical or other form.

The units described as separate units may or may not be physically separate, and the units displayed as units may or may not be physical units, that is, may be located in one place, or may be distributed over a plurality of network units. Some or all of the cells may be selected according to actual needs to achieve the object of the present embodiment.

In addition, the functional units in the embodiments of the present disclosure may be integrated into one processing unit, may be a separate physical presence of each unit, or may be integrated into one unit of two or more units.

The functions may be stored in a computer readable storage medium if they are implemented in the form of a software functional unit and sold or used as an independent product. Based on such an understanding, the technical solution of the present disclosure, essentially or in part contributing to the prior art, or part of the technical solution, may be embodied in the form of a software product stored in a storage medium including several instructions for causing a computer device (which may be a personal computer, server, network device, or the like) to perform all or part of the steps of the methods described in the various embodiments of the present disclosure. The foregoing storage medium includes a USB flash drive, a removable hard disk, a read-only memory (Read-Only Memory) ROM, a random access memory (Random Access Memory, RAM), a magnetic disk, an optical disc, and the like.

The foregoing description is merely specific embodiments of the present disclosure, but the protection scope of the present disclosure is not limited thereto. Any variation or replacement readily contemplated by a person skilled in the art within the scope of the present disclosure shall fall within the protection scope of the present disclosure. Accordingly, the scope of protection of the present disclosure shall be subject to the scope of protection of the claims.

## Claims

1. A method for information processing, the method being applied to a network device capable of connecting to at least one core network or connected to at least one type of core networks, the method comprising:
transmitting (S21) first indication information for a core network to a terminal device, and
receiving core network selection information from the terminal device, wherein the core network selection information comprises a target core network type selected by the terminal device and/or identification information of a target core network selected by the terminal device,
wherein the first indication information is used to assist the terminal device to select a target core network type and/or a target core network;
wherein the first indication information comprises:
at least one core network type; and
a parameter corresponding to each core network type, wherein the parameter corresponding to each core network type comprises a parameter associated with a feature corresponding to each core network type, and the method being **characterised in that** the feature comprises at least one of: a data transmission mechanism, or a power saving mechanism.

2. The method of claim 1, wherein the transmitting first indication information for a core network to a terminal device comprises:
transmitting the first indication information for the core network via broadcast signaling or dedicated signaling.

3. The method of claim 1, wherein the method further comprises:
transmitting a service request to a core network corresponding to the target core network type selected by the terminal device; or
determining a target core network selected by the terminal device according to the identification information of the target core network selected by the terminal device, and transmitting a service request to the target core network selected by the terminal device.

4. The method of claim 1 or 3, wherein the core network type comprises one of a fifth generation, 5G, core network, an evolved packet core network, EPC, or a third generation, 3G, core network.

5. A method for information processing, the method being applied to a terminal device, the method comprising:
receiving (S31) first indication information for a core network from a network device, wherein the first indication information is used to assist the terminal device to select a target core network type and/or a target core network; the network device is capable of connecting to at least one core network or to at least one core network type;
selecting (S32) a target core network type and/or a target core network based on the first indication information for the core network; and
transmitting core network selection information to the network device responsive to initiating a service request, wherein the core network selection information comprises a target core network type selected by the terminal device and/or identification information of the target core network selected by the terminal device,
wherein the first indication information comprises:
at least one core network type; and
a parameter corresponding to each core network type, wherein the parameter corresponding to each core network type comprises a parameter associated with a feature corresponding to each core network type, and the method being **characterised in that** the feature comprises at least one of: a data transmission mechanism, or a power saving mechanism.

6. The method of claim 5, wherein the receiving first indication information for a core network from a network device comprises:
receiving, via broadcast signaling or dedicated signaling, the first indication information for the core network from the network device.

7. The method of claim 5, wherein the selecting a target core network type and/or a target core network based on the first indication information for the core network comprises one of:
responsive to registering with a core network, selecting a target core network type and/or selecting a target core network based on the first indication information for the core network;
responsive to transmitting a service request to a core network of at least one core network type, selecting a target core network type and/or selecting a target core network based on the first indication information for the core network; or
responsive to transmitting a service request to at least one core network, selecting a target core network type and/or selecting a target core network based on the first indication information for the core network.

8. The method of claim 7, wherein the selecting a target core network type and/or selecting a target core network comprises one of:
selecting one or more target core network types and/or one or more target core networks according to features or preset features supported by the terminal device;
selecting one or more target core network types and/or one or more target core networks according to second indication information of the network device; wherein the second indication information is used to indicate a core network type and/or a core network that can be selected by the terminal device; or
selecting one or more target core network types and/or one or more target core networks according to predefined rules; wherein the predefined rules comprise priorities of different types of core networks, and/or priorities of different core networks.

9. The method of any one of claims 5-8, wherein the core network type comprises one of: a fifth generation, 5G, core network, an evolved packet core network, EPC, or a third generation, 3G, core network.

10. A network device comprising a processor and a memory for storing a computer program capable of running on the processor,
wherein the memory is used to store the computer program, and the processor is configured to invoke and run the computer program stored in the memory to perform the method according to any one of claims 1 to 4.

11. A terminal device comprising a processor and a memory for storing a computer program capable of running on the processor,
wherein the memory is used to store the computer program, and the processor is configured to invoke and run the computer program stored in the memory to perform the method of any one of claims 5-9.

## Patentansprüche

1. Verfahren zur Datenverarbeitung, wobei das Verfahren auf eine Netzvorrichtung angewendet wird, die sich mit mindestens einem Kernnetz verbinden kann oder mit mindestens einem Typ von Kernnetzen verbunden ist, wobei das Verfahren Folgendes umfasst:
Senden (S21) von ersten Angabeinformationen für ein Kernnetz an eine Endgerätvorrichtung und
Empfangen von Kernnetzauswahlinformationen von der Endgerätvorrichtung, wobei die Kernnetzauswahlinformationen einen Zielkernnetztyp, der durch die Endgerätvorrichtung ausgewählt ist, und/oder Identifikationsinformationen eines Zielkernnetzes, das durch die Endgerätvorrichtung ausgewählt ist, umfassen,
wobei die ersten Angabeinformationen verwendet werden, um die Endgerätvorrichtung zu unterstützen, einen Zielkernnetztyp und/oder ein Zielkernnetz auszuwählen;
wobei die ersten Angabeinformationen Folgendes umfassen:
mindestens einen Kernnetztyp und
einen Parameter, der jedem Kernnetztyp entspricht, wobei der Parameter, der jedem Kernnetztyp entspricht, einen Parameter umfasst, der einem Merkmal zugeordnet ist, das jedem Kernnetztyp entspricht, und wobei das Verfahren **dadurch gekennzeichnet ist, dass** das Merkmal einen Datenübertragungsmechanismus und/oder einen Energiesparmechanismus umfasst.

2. Verfahren nach Anspruch 1, wobei das Senden erster Angabeinformationen für ein Kernnetz an eine Endgerätvorrichtung Folgendes umfasst:
Senden der ersten Angabeinformationen für das Kernnetz über Rundsendungssignalisierung oder fest zugeordnete Signalisierung.

3. Verfahren nach Anspruch 1, wobei das Verfahren ferner Folgendes umfasst:
Senden einer Dienstanforderung an ein Kernnetz, das dem Zielkernnetztyp entspricht, der durch die Endgerätvorrichtung ausgewählt ist, oder
Bestimmen eines Zielkernnetzes, das durch die Endgerätvorrichtung ausgewählt ist, gemäß den Identifikationsinformationen des Zielkernnetzes, das durch die Endgerätvorrichtung ausgewählt ist, und Senden einer Dienstanforderung an das Zielkernnetz, das durch die Endgerätvorrichtung ausgewählt ist.

4. Verfahren nach Anspruch 1 oder 3, wobei der Kernnetztyp ein Kernnetz der fünften Generation, 5G, ein Netz mit Evolved Packet Core, EPC, oder ein Kernnetz der dritten Generation, 3G, umfasst.

5. Verfahren zur Datenverarbeitung, wobei das Verfahren auf eine Endgerätvorrichtung angewendet wird, wobei das Verfahren Folgendes umfasst:
Empfangen (S31) von ersten Angabeinformationen für ein Kernnetz von einer Netzvorrichtung, wobei die ersten Angabeinformationen verwendet werden, um die Endgerätvorrichtung zu unterstützen, einen Zielkernnetztyp und/oder ein Zielkernnetz auszuwählen; wobei die Netzvorrichtung sich mit mindestens einem Kernnetz oder mit mindestens einem Kernnetztyp verbinden kann;
Auswählen (S32) eines Zielkernnetztyps und/oder eines Zielkernnetzes auf der Grundlage der ersten Angabeinformationen für das Kernnetz und
Senden von Kernnetzauswahlinformationen an die Netzvorrichtung als Antwort auf das Beginnen einer Dienstanforderung, wobei die Kernnetzauswahlinformationen einen Zielkernnetztyp, der durch die Endgerätvorrichtung ausgewählt ist, und/oder Identifikationsinformationen des Zielkernnetzes, das durch die Endgerätvorrichtung ausgewählt ist, umfassen,
wobei die ersten Angabeinformationen Folgendes umfassen:
mindestens einen Kernnetztyp und
einen Parameter, der jedem Kernnetztyp entspricht, wobei der Parameter, der jedem Kernnetztyp entspricht, einen Parameter umfasst, der einem Merkmal zugeordnet ist, das jedem Kernnetztyp entspricht, und wobei das Verfahren **dadurch gekennzeichnet ist, dass** das Merkmal einen Datenübertragungsmechanismus und/oder einen Energiesparmechanismus umfasst.

6. Verfahren nach Anspruch 5, wobei das Empfangen erster Angabeinformationen für ein Kernnetz von einer Netzvorrichtung Folgendes umfasst:
Empfangen der ersten Angabeinformationen für das Kernnetz von der Netzvorrichtung über Rundsendungssignalisierung oder fest zugeordneter Signalisierung.

7. Verfahren nach Anspruch 5, wobei das Auswählen eines Zielkernnetztyps und/oder eines Zielkernnetzes auf der Grundlage der ersten Angabeinformationen für das Kernnetz eines der Folgenden umfasst:
als Antwort auf das Anmelden bei einem Kernnetz Auswählen eines Zielkernnetztyps und/oder Auswählen eines Zielkernnetzes auf der Grundlage der ersten Angabeinformationen für das Kernnetz;
als Antwort auf das Senden einer Dienstanforderung an ein Kernnetz mit mindestens einem Kernnetztyp Auswählen eines Zielkernnetztyps und/oder Auswählen eines Zielkernnetzes auf der Grundlage der ersten Angabeinformationen für das Kernnetz oder
als Antwort das Senden einer Dienstanforderung an mindestens ein Kernnetz Auswählen eines Zielkernnetztyps und/oder Auswählen eines Zielkernnetzes auf der Grundlage der ersten Angabeinformationen für das Kernnetz.

8. Verfahren nach Anspruch 7, wobei das Auswählen eines Zielkernnetztyps und/oder das Auswählen eines Zielkernnetzes Folgendes umfasst:
Auswählen eines oder mehrere Zielkernnetztypen und/oder eines oder mehrere Zielkernnetze gemäß Merkmalen oder im Voraus eingestellten Merkmalen, die durch die Endgerätvorrichtung unterstützt werden;
Auswählen eines oder mehrerer Zielkernnetztypen und/oder eines oder mehrerer Zielkernnetze gemäß zweiten Angabeinformationen der Netzvorrichtung; wobei die zweiten Angabeinformationen verwendet werden, um einen Zielnetztyp und/oder ein Kernnetz anzugeben, das durch die Endgerätvorrichtung ausgewählt werden kann, oder
Auswählen eines oder mehrerer Zielkernnetztypen und/oder eines oder mehrerer Zielkernnetze gemäß im Voraus definierten Regeln; wobei die im Voraus definierten Regeln Prioritäten von unterschiedlichen Typen von Kernnetzen und/oder Prioritäten von unterschiedlichen Kernnetzen umfassen.

9. Verfahren nach einem der Ansprüche 5-8, wobei der Kernnetztyp ein Kernnetz der fünften Generation, 5G, oder ein Netz mit Evolved Packet Core, EPC, oder ein Kernnetz der dritten Generation, 3G, umfasst.

10. Netzvorrichtung, die einen Prozessor und einen Speicher zum Speichern eines Computerprogramms, das auf dem Prozessor laufen kann, umfasst,
wobei der Speicher verwendet wird, um das Computerprogramm zu speichern, und der Prozessor konfiguriert ist, das Computerprogramm, das in dem Speicher gespeichert ist, aufzurufen und auszuführen, um das Verfahren nach einem der Ansprüche 1 bis 4 durchzuführen.

11. Endgerätvorrichtung, die einen Prozessor und einen Speicher zum Speichern eines Computerprogramms, das auf dem Prozessor laufen kann, umfasst,
wobei der Speicher verwendet wird, um das Computerprogramm zu speichern, und der Prozessor konfiguriert ist, das Computerprogramm, das in dem Speicher gespeichert ist, aufzurufen und auszuführen, um das Verfahren nach einem der Ansprüche 5-9 durchzuführen.

## Revendications

1. Procédé de traitement d'informations, le procédé étant appliqué à un dispositif de réseau capable de se connecter à au moins un réseau central ou connecté à au moins un type de réseaux centraux, le procédé comprenant :
la transmission (S21) de premières informations d'indication pour un réseau central à un dispositif terminal, et
la réception d'informations de sélection de réseau central en provenance du dispositif terminal, les informations de sélection de réseau central comprenant un type de réseau central cible sélectionné par le dispositif terminal et/ou des informations d'identification d'un réseau central cible sélectionné par le dispositif terminal,
les premières informations d'indication étant utilisées pour aider le dispositif terminal à sélectionner un type de réseau central cible et/ou un réseau central cible ;
les premières informations d'indication comprenant :
au moins un type de réseau central ; et
un paramètre correspondant à chaque type de réseau central, le paramètre correspondant à chaque type de réseau central comprenant un paramètre associé à une caractéristique correspondant à chaque type de réseau central, et le procédé étant **caractérisé en ce que** la caractéristique comprend au moins l'un parmi : un mécanisme de transmission de données et un mécanisme d'économie d'énergie.

2. Procédé selon la revendication 1, la transmission de premières informations d'indication pour un réseau central à un dispositif terminal comprenant :
la transmission des premières informations d'indication pour le réseau central par l'intermédiaire d'une signalisation de diffusion ou d'une signalisation dédiée.

3. Procédé selon la revendication 1, le procédé comprenant en outre :
la transmission d'une demande de service à un réseau central correspondant au type de réseau central cible sélectionné par le dispositif terminal ; ou
la détermination d'un réseau central cible sélectionné par le dispositif terminal en fonction des informations d'identification du réseau central cible sélectionné par le dispositif terminal, et la transmission d'une demande de service au réseau central cible sélectionné par le dispositif terminal.

4. Procédé selon la revendication 1 ou 3, le type de réseau central comprenant un réseau central parmi un réseau central de cinquième génération 5G, un réseau central de paquets évolué, EPC, et un réseau central de troisième génération, 3G.

5. Procédé de traitement d'informations, le procédé étant appliqué à un dispositif terminal, le procédé comprenant :
la réception (S31) de premières informations d'indication pour un réseau central en provenance d'un dispositif de réseau, les premières informations d'indication étant utilisées pour aider le dispositif terminal à sélectionner un type de réseau central cible et/ou un réseau central cible ; le dispositif de réseau étant capable de se connecter à au moins un réseau central ou à au moins un type de réseau central ;
la sélection (S32) d'un type de réseau central cible et/ou d'un réseau central cible sur la base des premières informations d'indication pour le réseau central ; et
la transmission d'informations de sélection de réseau central au dispositif de réseau en réponse à l'initiation d'une demande de service, les informations de sélection de réseau central comprenant un type de réseau central cible sélectionné par le dispositif terminal et/ou des informations d'identification du réseau central cible sélectionné par le dispositif terminal,
les premières informations d'indication comprenant :
au moins un type de réseau central ; et
un paramètre correspondant à chaque type de réseau central, le paramètre correspondant à chaque type de réseau central comprenant un paramètre associé à une caractéristique correspondant à chaque type de réseau central, et le procédé étant **caractérisé en ce que** la caractéristique comprend au moins un élément parmi : un mécanisme de transmission de données et un mécanisme d'économie d'énergie.

6. Procédé selon la revendication 5, la réception de premières informations d'indication pour un réseau central en provenance d'un dispositif de réseau comprenant :
la réception, par l'intermédiaire d'une signalisation de diffusion ou d'une signalisation dédiée, de premières informations d'indication pour le réseau central en provenance du dispositif de réseau.

7. Procédé selon la revendication 5, la sélection d'un type de réseau central cible et/ou d'un réseau central cible sur la base des premières informations d'indication pour le réseau central comprenant l'un des éléments suivants :
en réponse à l'enregistrement avec un réseau central, la sélection d'un type de réseau central cible et/ou la sélection d'un réseau central cible sur la base des premières informations d'indication pour le réseau central ;
en réponse à la transmission d'une demande de service à un réseau central d'au moins un type de réseau central, la sélection d'un type de réseau central cible et/ou la sélection d'un réseau central cible sur la base des premières informations d'indication pour le réseau central ; ou
en réponse à la transmission d'une demande de service à au moins un réseau central, la sélection d'un type de réseau central cible et/ou la sélection d'un réseau central cible sur la base des premières informations d'indication pour le réseau central.

8. Procédé selon la revendication 7, la sélection d'un type de réseau central cible et/ou la sélection d'un réseau central cible comprenant l'un des éléments suivants :
la sélection d'un ou plusieurs types de réseaux centraux cibles et/ou d'un ou plusieurs réseaux centraux cibles en fonction de caractéristiques ou de caractéristiques prédéfinies prises en charge par le dispositif terminal ;
la sélection d'un ou plusieurs types de réseaux centraux cibles et/ou d'un ou plusieurs réseaux centraux cibles en fonction de secondes informations d'indication du dispositif de réseau ; les secondes informations d'indication étant utilisées pour indiquer un type de réseau central et/ou un réseau central qui peut être sélectionné par le dispositif terminal ; ou
la sélection d'un ou plusieurs types de réseaux centraux cibles et/ou d'un ou plusieurs réseaux centraux cibles en fonction de règles prédéfinies ; les règles prédéfinies comprenant des priorités de différents types de réseaux centraux, et/ou des priorités de différents réseaux centraux.

9. Procédé selon l'une quelconque des revendications 5 à 8, le type de réseau central comprenant l'un des éléments suivants : un réseau central de cinquième génération, 5G, un réseau central de paquets évolué, EPC, ou un réseau central de troisième génération, 3G.

10. Dispositif de réseau comprenant un processeur et une mémoire pour stocker un programme informatique capable de s'exécuter sur le processeur,
la mémoire étant utilisée pour stocker le programme informatique, et le processeur étant configuré pour appeler et exécuter le programme informatique stocké dans la mémoire afin de réaliser le procédé selon l'une quelconque des revendications 1 à 4.

11. Dispositif terminal comprenant un processeur et une mémoire pour stocker un programme informatique capable de s'exécuter sur le processeur,
la mémoire étant utilisée pour stocker le programme informatique, et le processeur étant configuré pour appeler et exécuter le programme informatique stocké dans la mémoire pour réaliser le procédé selon l'une quelconque des revendications 5 à 9.
